# EUROPEAN PATENT SPECIFICATION

(11) **EP 2 143 917 B1**
(45) Date of publication and mention of the grant of the patent: **02.11.2011**
(21) Application number: 08159831.0
(22) Date of filing: 07.07.2008
(51) Int. Cl.: F02D 31/00, F02D 41/26, F02D 41/30, F02D 41/02

(54) **Control device for retrofitting a diesel engine fuel injection system**
Steuervorrichtung zur Nachrüstung eines Brennstoffeinspritzsystems für einen Dieselmotor
Dispositif de contrôle pour modifier un système d'injection de carburant de moteur diesel

(43) Date of publication of application: 13.01.2010
(73) Proprietor: PSI Luxembourg S.A., 9911 Troisvierges (LU)
(72) Inventor: Schumacher, Christian, 4784, Sankt Vith (BE); Fogen, René, 4780, Sankt Vith (BE)
(74) Representative: Office Freylinger

(56) References cited:
- EP-A- 0 740 061
- US-A- 5 268 842
- US-A- 5 983 156
- US-A1- 2005 119 819
- US-A1- 2008 065 313
- US-B1- 6 436 005
- US-B1- 6 898 512

## Description

### Technical field

The present invention generally relates to retrofitting a fuel injection system of a Diesel engine of an automobile with manual transmission or manually operable transmission (such as e.g. a Tiptronic transmission), in particular an electronic control device serving such purpose.

### Background Art

In the automotive field, various ideas have been presented to reduce fuel consumption. It has been shown that fuel consumption of an automobile significantly depends on the driver's way of driving. Various systems have been disclosed, which provide the driver with an indication as to which gear provides most economic performance in a given driving situation. Such systems are described, for instance in WO 2007/073828 and DE 10 2004 002 179 A1. The latter document discloses that the gearshift indication can be provided to the driver in the form of a haptic feedback signal via the accelerator pedal. Document US 6,436,005 discloses a system for controlling drivetrain components in a fuel-efficient manner, which includes a control computer that selects between different engine speed limits depending on the current engine load. The system of US 6,436,005 encourages the driver to manually shift at lower engine speeds in the lower gears while also making more engine speed (and higher engine torque) available when there is a legitimate need therefore (such as when climbing steep grades).

Current systems have the disadvantage that they require the installation of acoustic, visual or haptic feedback devices prompting the driver to change gears. Thus, in case one wishes to retrofit an automobile with such system, modifications are required in the passenger compartment, which complicates and thereby renders expensive its installation. One drawback of the known systems is that they rely upon stimuli that potentially distract the driver's attention from the road. The known systems furthermore have no direct influence on fuel consumption and the economic effect depends entirely on the driver's prompt reactions to gear-shift indications.

### Technical Problem

It is an object of the present invention to provide a system, which may be configured to prompt the driver to change gears if the next gear provides a more economic way of driving, which does not have, or has only to a lesser extent the drawbacks mentioned beforehand. This object may be achieved with an electronic control device as claimed in claim 1.

### General Description of the Invention

The invention proposes an electronic control device for retrofitting the fuel injection system of a Diesel engine of an automobile with manual transmission or manually operable transmission (such as e.g. a Tiptronic transmission). Such electronic control device comprises
at least one input port (hereinafter: injection signal input port) configured for connecting the electronic control device to at least one control unit output port of an electronic control unit (hereinafter referred to as ECU) supplying, on its at least one control unit output port, a fuel injection control signal for governing injection quantity (i.e. the amount of fuel injected into a cylinder per cycle) of a fuel injection actuator;
at least one output port (hereinafter: injection signal output port) configured for connecting the electronic control device to at least one fuel injection actuator input port of a fuel injection actuator responsive to a fuel injection control signal on its at least one fuel injection actuator input port;
and a processor configured as to ascertain a current value of rotational speed of the Diesel engine shaft to output a processed fuel injection control signal on the at least one injection signal output port in response to a fuel injection control signal being supplied to it on the at least one injection signal input port, and, if the current value of rotational speed exceeds a predefined threshold (hereinafter: upper threshold), to insert into the processed fuel injection control signal an injection quantity that is reduced with respect to the injection quantity contained in the fuel injection control signal supplied on the at least one injection signal input port.

In the context of the present, "fuel injection system" designates the combination of fuel injection actuators (such as e.g. solenoid or piezo driven injection actuators) and their control unit. Those skilled will appreciate that the control device may be connected between the existing ECU and fuel injection actuators (injectors including e.g. injection pumps or injection valves). When in operation, the control device receives the injection actuator control signals that the ECU intends to send to the injection actuator and ascertains the current rotational speed value. To ascertain the current rotational speed value, the control device may be connected to a rotational speed sensor or an output port of the ECU outputting the current rotational speed value within a rotational speed signal. Alternatively, the control device could be configured to retrieve the current rotational speed values from the injection actuator control signals provided by the ECU. If the current rotational speed value exceeds the predefined upper threshold, the injection control device signal actually forwarded to the injection actuator by the control device causes the injection control device to inject a lower fuel quantity into the cylinder than it would have been caused to inject if the signal originally output by the ECU had reached it. Thus, when the engine is operated at rotational speed above the upper threshold, the automobile will react less promptly to increased pressure on the accelerator pedal than it would under the sole control of the ECU (i.e. if the control device had not been built in). Below the upper threshold, the control device outputs injection control signals having an injection quantity inserted therein, which is not reduced with respect to the original injection quantity (i.e. that contained in the injection control signal output by the ECU). Thus, the automobile may accelerate normally until the rotational speed crosses the upper threshold. At this point, the control device begins to reduce the injection quantity. Past the upper threshold, the driver at some point notices that acceleration becomes weak and is thereby induced to shift into the next gear. Those skilled will appreciate that the driver takes the decision to shift gears all naturally, as part of his or her normal way of driving, so that conventional gear shift indicators using beeps, blinking lights, or haptic stimuli that are likely to distract the driver's attention are - at least in principle - no longer necessary. Notwithstanding that, the present invention can of course be used in combination with conventional gearshift indicators. In comparison to a car not equipped with the control device according to the invention, the point as from which the car does no longer accelerate according to the driver's subjective expectation is reached earlier. Consequently, the driver will adopt a more economic way of driving. It shall be noted that it is not necessary for the purpose of the present invention that acceleration weakens abruptly. On the contrary, all transitions are preferably carried out in such a way that they do not affect driving comfort.

Preferably, the processed fuel injection control signal has the reduced injection quantity inserted therein as a reduced injection time and/or a reduced injection pressure. In the context of the present, when information is said to be "inserted" in a signal, this means that the signal carries this information in a form such that the signal produces the desired result or the information can be retrieved when the signal arrives at its destination. The signal can thus be an analog or a digital signal. For example, the fuel injection control signal may take the appearance of a square waveform having a variable frequency, which is proportional to the current rotational speed of the engine, and a variable duty cycle, which indicates the current injection time value. In this case, the control device is preferably configured so as to modulate the duty cycle of the fuel injection control signal (whereas the frequency of the processed fuel injection control signal remains the same as that of the fuel injection control signal supplied by the ECU).

The predefined upper threshold could be gear-independent, i.e. be the same whatever gear is currently in use; the processor in this case does not need to know the current gear. Preferably, however, the electronic control device comprises an input port (hereinafter: gear signal input port) configured for receiving a gear signal indicating a current gear and the predefined upper threshold is gear-dependent. Most preferably, the predefined gear-dependent upper threshold corresponds at least approximately to an optimal shift point between the current gear and a next gear. In the context of the present, we will use the term "optimal shift point" only in relation to up-shift processes, i.e. to designate the (current-gear-dependent) rotational speed as from which the next upper gear would provide higher torque. It shall be noted that the processor may be configured as to output the processed fuel injection control signal only if the current gear is member of a predefined set of gears, i.e. processor could suppress the reduction of the injection quantity if it does not find the current gear is not within the predefined set of gears. Thus, injection quantity reduction could be suppressed for the uppermost gear (which is preferred if a reduction of top speed is not desired) and/or reverse, for instance. If a conventional gearshift indicator is used in combination with the present control device, the conventional gearshift indicator is preferably configured to indicate the optimal shift point while the control device is configured to make acceleration performance noticeably decline slightly above (e.g. up to 300 rpm above) the optimal shift point.

According to the invention, the reduction of the injection quantity (relative to the original injection quantity, e.g. in percent of the injection quantity inserted in the original injection actuator control signal) increases from the predefined threshold with increasing rotational speed. Advantageously, reduction could increase substantially linearly with rotational speed in a rotational speed interval, which ranges from the predefined upper threshold to about 1000 rpm above the predefined upper threshold. In the context of the present, "about 1000 rpm" is preferably interpreted to mean "from 500-1500 rpm". As from about 1000 rpm above the predefined upper threshold the reduction preferably amounts to between 40 and 100%, more preferably between 50 and 80%, and still more preferably between 60 and 70%. Those skilled will appreciate that by defining a reduction of 100% at a certain rotational speed point, the rotational speed of the engine will not exceed that point, so that in practice a rotational speed limitation is so implemented.

The processor may be configured as to output an unmodified fuel injection control signal (i.e. the processed injection control signal is the same as the original fuel injection control signal from the ECU) if the current value of rotational speed lies below the predefined upper threshold. In this configuration, the ECU controls the injection quantity up to the upper threshold and the control device only forwards the injection actuator control signals issued by the ECU. According to a preferred aspect of the invention, however, the processor is configured as to insert into the processed fuel injection control signal an increased injection quantity compared to the fuel injection control signal supplied on the at least one injection signal input port if the current value of rotational speed lies between a predefined lower threshold and the predefined upper threshold. In this configuration, acceleration performance of the automobile is improved with respect to factory configuration. Preferably such optimization between the lower and upper thresholds is implemented in such a way to optimize fuel economy. Those skilled in the art will appreciate that the increase in injection quantity (with respect to the original injection quantity) below the upper threshold in combination with the reduction above that threshold results in a more noticeable deterioration of the acceleration performance in the rotational speed range in which the driver is intended to shift gears. Consequently, the driver will be more inclined to shift into the next gear than to continue accelerating in the current one. Preferably, the lower threshold is gear-dependent. Most preferably, the lower threshold is situated above the rotational speed value at which the turbocharger sets in. Indeed, as long as pressure inside the air intake manifold is atmospheric pressure, an increase of injection quantity with respect to the factory configuration typically results in less than optimal combustion (unless the original injection quantity has been set too low).

According to a further preferred aspect of the invention, the processor is configured to be switched into a cruise control mode in which the processor regulates the rotational speed value to a target value by adjusting the amount of injection quantity inserted into the fuel injection control signal output on the at least one injection signal output port. In this configuration the control device preferably comprises further input ports for receiving signals indicating when the clutch pedal or the brake pedal is operated and which switch the processor out of the cruise control mode. Preferably, the control device also comprises an input port (hereinafter navigation signal input port) for receiving a navigation signal (e.g. from a GPS or Galileo receiver) indicating a current geographical position and a memory having a speed limit map data stored therein, wherein the processor is configured as to determine the target rotational speed value based upon the current geographical position and the speed limit map data, preferably also depending on the current gear. In practice, the current geographical position is used to retrieve the speed limit corresponding to the current geographical position and the speed limit is converted into the target rotational speed value, taking into account the current transmission ratio (i.e. the current gear). Alternatively or additionally, the control device can be equipped with a port for connection to a radio receiver, able to receive a broadcast signal indicating a speed limit for the geographical location of the broadcast.

According to a preferred aspect of the invention, the electronic control device comprises an input port (hereinafter: turbocharger signal input port) for receiving a turbocharger pressure control signal, a turbocharger signal output port for connecting the electronic control device to an input port of a turbocharger responsive to a turbocharger pressure control signal on its input port. The processor may be configured as to output a modified turbocharger pressure control signal on the at least one turbocharger signal output port in response to a turbocharger pressure control signal being supplied to it on the at least one turbocharger signal input port, and to insert into the modified turbocharger pressure control signal a modified turbocharger pressure depending on the current value of rotational speed. Thus, in this aspect of the invention, the control device modifies turbocharger pressure in addition to injection quantity, in order to influence engine torque and/or to ensure emissions compatibility, e.g. below the upper threshold. The processor may increase or decrease turbocharger pressure (within certain limits) depending on several parameters, e.g. rotational speed, current transmission ratio, accelerator pedal position, etc.

An aspect of the invention concerns a method of retrofitting the fuel injection system of a Diesel engine of an automobile with manual transmission. Such method comprises connecting an electronic control device as set out before between the ECU and a fuel injection actuator of the Diesel engine.

### Brief Description of the Drawings

Further details and advantages of the present invention will be apparent from the following detailed description of a not limiting embodiment with reference to the attached drawings, wherein:
Fig. 1 is a schematic diagram of a first embodiment of a control device for retrofitting the ECU of a Diesel engine of a car;
Fig. 2 is a schematic diagram of a second embodiment of a control device for retrofitting the ECU of a Diesel engine of a car;
Fig. 3 is a graph illustrating adjustments of injection time as a function of rotational speed, according to an example of the invention.

### Description of Preferred Embodiments

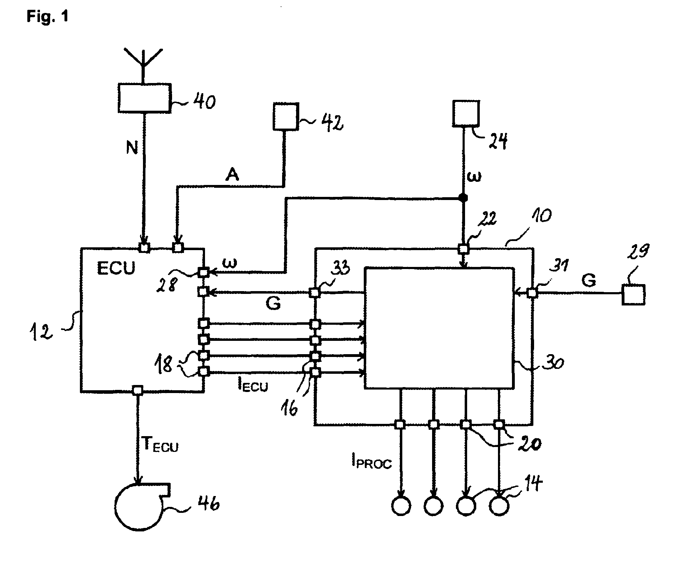

A first embodiment of the invention is described with reference to Fig. 1. The control device 10 is connected between the ECU 12 of a Diesel engine and the injection valves 14 of the engine. The control device 10 comprises several injection actuator control signal input ports 16, by which it is connected to corresponding injection actuator output ports 18 of the ECU, injection actuator control signal output ports 20, by which it is connected to the injection valves 14, a rotational speed signal input port 22, by which it is connected to a rotational speed sensor 24. The latter is also connected to a rotational speed signal input port 28 of the ECU 12. As an alternative, the control device could also be connected in series between rotational speed sensor 24 and ECU 12. The control device 10 further comprises a processor 30, such as e.g. an application-specific integrated circuit (ASIC) a field-programmable gate array (FPGA) or any other suitable microprocessor, which is programmed to receive the original fuel injection control signals I_{ECU} and to output processed, possibly processed fuel injection control signals I_{PROC} to the injection valves 14 in response to fuel injection control signals I_{ECU} being supplied to it. If the current value of rotational speed w exceeds the predefined upper threshold, the processor 30 inserts into the processed injection quantity **I_{PROC}** an injection quantity, which is reduced with respect to the injection quantity contained in the original fuel injection control signal I_{ECU}. The upper threshold and possibly the amount of the reduction preferably depends on the current gear indicated by gear signal G provided by gear sensor 29 on gear signal input port 31. Gear signal G is forwarded to the ECU 12 on output ports 26 and 33, respectively. As an alternative control device 10 and ECU 12 could be connected in parallel to gear sensor 29.

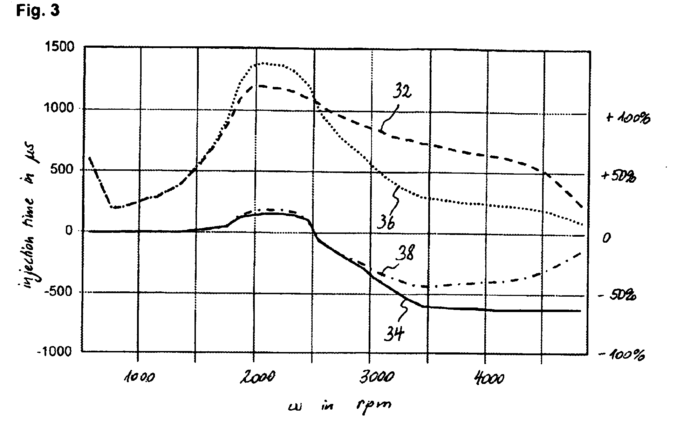

Fig. 3 illustrates the way the adjustments of the injection quantities inserted into the fuel injection control signals is carried out according to the currently most preferred embodiment of the invention. In this embodiment, injection pressure is kept substantially constant and the injection quantity is thus a linear function of the injection time, represented in µs on the left vertical axis of the graph. The dashed line 32 represents the injection time inserted into the fuel injection control signal I_{ECU} by the ECU 12 in full load conditions as a function of rotational speed w in rotations per minute (rpm). For each rotational speed value a correction (in %) is made available to the processor 30, e.g. as a look-up table or a function. The correction values as a function of rotational speed are represented in Fig. 3 by the solid line 34, which has to be read in conjunction with the scale on the right-hand side of the graph. As can be seen, the processor applies no (or a zero-value) correction in the rotational speed range up to about 1400 rpm, which corresponds to the lower threshold mentioned above. From this lower threshold to the upper threshold, situated at about 2500 rpm, the injection time inserted into the processed fuel injection control signal I_{PROC} (shown as the dotted line 36) is increased with respect to the original injection time. Above the upper threshold, the injection time of the processed fuel injection control signal I_{PROC} is reduced with respect to the original injection time. The dash-dotted line 38 represents the injection time correction for the present example in absolute figures. In the example of Fig. 3, the relative reduction of the injection time (solid line 34) increases substantially linearly with rotational speed in the rotational speed interval between the upper threshold at about 2500 rpm and about 3500 rpm. At about 3500 rpm, the relative reduction reaches its maximum, which in the present example is 63% (corresponding to a correction of -63%). With a correction scheme as shown in Fig. 3, the driver will notice slightly better acceleration (or torque) values in the range from about 1800 to 2400 rpm, whereas deterioration of the acceleration values becomes noticeable to him or her as from about 2600-2800 rpm. Consequently, in the current example, the driver would normally be induced to shift gears as from this rotational speed if he or she wants to continue accelerating. The processor 30 preferably suppresses the reduction of the injection time if the current gear is the uppermost gear or reverse.

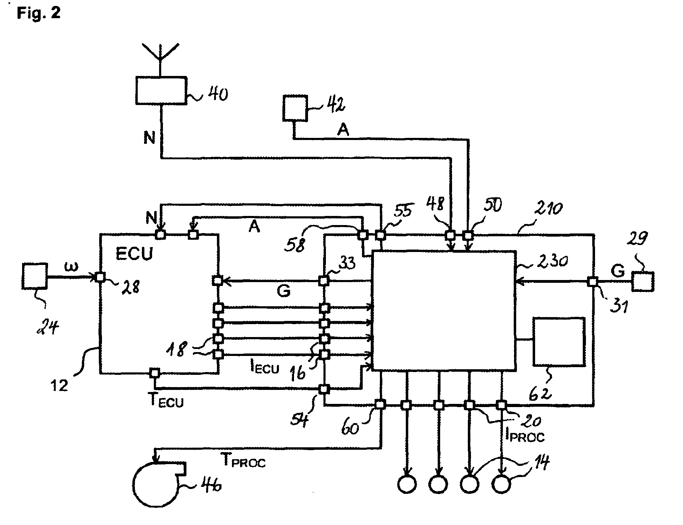

In the embodiment of Fig. 1, devices like GPS receiver 40 and acceleration pedal sensor 42 are connected to the ECU 12 and signals delivered by them are not taken into account by the control device 10 for computing the processed injection control signal I_{PROC}. The turbocharger 46 is also controlled by the ECU 12. Fig. 2 shows another preferred embodiment of an electronic control device 210 according to the invention. Where control device 210 has input ports and functionalities in common with control device 10, described with reference to Figs. 1 and 3, these will not be discussed again. Where control device 210 differs from control device 10, the difference will be explained.

While control device 10 is shown in Fig. 1 to have a dedicated input port 22 for rotational speed signal w, it should be noted that the control device could retrieve rotational speed information in other ways, e.g. by evaluating the incoming injection control signals I_{ECU} in this respect. Control device 210 does not have such dedicated rotational speed signal input port. As has been said above, injection control signals may have the shape of a square wave, the period of which is inversely proportional to rotational speed. Thus by determining the current frequency of the injection control signals I_{ECU}, the control device 210 ascertains the current rotational speed value. It should be noted that the way the rotational speed values are given to the electronic control device is, at least in principle, independent from other aspects of the invention. Accordingly, control device 10 of Fig. 1 could be modified in this respect without adopting other additional features of control device 210 shown in Fig. 2.

Control device 210 further comprises input ports 48 and 50 for connection to the GPS receiver 40 and the acceleration pedal sensor 42, respectively. A further input port 54 is provided for connection to the turbocharger control signal output port of the ECU 12. On these ports further input signals, such as accelerator pedal signal A and navigation signal N, are made available to the processor 210, which may take information contained in these signals into account for computing the correction of the injection time to be inserted into injection control signal I_{PROC}. Navigation signal N and accelerator pedal signal A are forwarded to the ECU 12 on output ports 55 and 58, respectively. The control device 210 could modify the information on the accelerator pedal position with respect to the original information provided by the acceleration pedal sensor 42 and forward a modified accelerator pedal signal to the ECU 12. This could be effected depending on the current rotational speed value. For instance, the control device 210 could reduce the driver's demand for acceleration contained in the acceleration pedal signal depending on current rotational speed, in particular above the upper threshold. As those skilled in the art will appreciate, this enhances the effect of injection quantity reduction in the injection control signals and may, in particular, make it easier, if desired, to hard-limit the rotational speed of the engine. The processor 210 may be programmed to output a processed turbocharger pressure control signal T_{PROC} on turbocharger signal output port 60 in response to an original turbocharger pressure control signal T_{ECU} being supplied to it on the at least one turbocharger signal input port 54. Via signal T_{PROC,} the control device 210 may cause the turbocharger 46 to operate at a regime differing from the regime intended by the ECU 12 e.g. by turbocharger pressure.

The processor 230 can operate in different modes. Normally, it operates in the same way as described above for processor 30. In cruise control mode, the processor 230 regulates the rotational speed value to a target value by adjusting the amount of injection time inserted into the processed fuel injection control signal I_{PROC}. To enter and exit cruise control mode, a button (not shown) is normally provided on the dashboard. To exit cruise control mode, the driver may also operate the clutch or the brake pedal. The control device 210 comprises a memory containing speed limit map data. Using the current geographical position contained in the navigation signal N, the processor retrieves the currently valid speed limit and converts it into the target rotational speed value, taking into account the current transmission ratio (indicated by gear signal G).

## Claims

1. An electronic control device (10; 210) for retrofitting a fuel injection system of a Diesel engine of an automobile, comprising:
at least one injection signal input port (16) configured for connecting said electronic control device (10; 210) to at least one control unit output port (18) of an engine control unit (12) supplying, on its at least one control unit output port (18), a fuel injection control signal (I_{ECU}) for governing injection quantity of a fuel injection actuator (14);
at least one injection signal output port (20) configured for connecting said electronic control device to at least one fuel injection actuator input port of a fuel injection actuator (14) responsive to a fuel injection control signal on its at least one fuel injection actuator input port (14);
and a processor (30; 230) configured as to ascertain a current value of rotational speed of said Diesel engine, to output a processed fuel Injection control signal (I_{PROC}) on said at least one injection signal output port (20) in response to a fuel injection control signal (I_{ECU}) being supplied to it on said at least one injection signal input port (16), and to insert into said processed fuel injection control signal (I_{PROC}) a reduced injection quantity compared to said fuel injection control signal (I_{ECU}) supplied on said at least one injection signal input port (16) if said current value of rotational speed exceeds a predefined upper threshold, the reduction of the injection quantity increasing from said predefined threshold with increasing rotational speed.

2. The electronic control device (10, 210) according to claim 1, wherein said processed fuel injection control signal (I_{PROC}) has said reduced injection quantity inserted therein as at least one of a reduced injection time and a reduced injection pressure.

3. The electronic control device (10; 210) according to claim 1 or 2, comprising a gear signal input port (31) configured for receiving a gear signal (G) indicating a current gear and wherein said predefined upper threshold is gear-dependent.

4. The electronic control device (10; 210) according to claim 3, wherein said predefined gear-dependent upper threshold corresponds to an optimal shift point between said current gear and a next gear.

5. The electronic control device (10; 210) according to claim 3 or 4, wherein said processor (30; 230) is configured as to output said processed fuel injection control signal (I_{PROC}) only if said current gear is member of a predefined set of gears.

6. The electronic control device (10; 210) according to claim 5, wherein said reduction in relation to the injection quantity inserted in the original injection actuator control signal (I_{ECU}) increases substantially linearly with rotational speed in a rotational speed interval from said predefined upper threshold to from 500 to 1500 rpm above said predefined upper threshold.

7. The electronic control device (10; 210) according to claim 1 to 6, wherein said reduction amounts to between 40 and 80% as from a point in a range from 500 to 1500 rpm above said predefined upper threshold.

8. The electronic control device (10; 210) according to any one of claims 1 to 7, wherein said processor (30; 230) is configured as to output an unmodified fuel injection control signal if said current value of rotational speed lies below said predefined upper threshold.

9. The electronic control device according to any one of claims 1 to 7, wherein said processor (30; 230) is configured as to insert into said processed fuel injection control signal (I_{PROC}) an increased injection quantity compared to said fuel injection control signal (I_{ECU}) supplied on said at least one injection signal input port (16) if said current value of rotational speed lies between a predefined lower threshold and said predefined upper threshold.

10. The electronic control device (10; 210) according to claim 9, wherein said lower threshold is gear-dependent.

11. The electronic control device (10; 210) according to any one of claims 1 to 10, wherein said processor (30; 230) is configured to be switched into a cruise control mode in which said processor (30; 230) regulates said rotational speed value to a target value by adjusting the amount of injection quantity inserted into the processed fuel injection control signal (I_{PROC}) output on said at least one injection signal output port (20).

12. The electronic control device (10; 210) according to claim 11, comprising a navigation signal input port (48) for receiving a navigation signal (N) indicating a current geographical position and a memory having a speed limit map data stored therein, wherein said processor (30; 230) is configured as to determine said target value based upon said current geographical position and said speed limit map data.

13. The electronic control device (10; 210) according to any one of claims 1 to 12, comprising a turbocharger signal input port (54) for receiving a turbocharger pressure control signal (T_{ECU}), a turbocharger signal output port (60) for connecting said electronic control device (10; 210) to an input port of a turbocharger (46) responsive to a turbocharger pressure control signal on its input port, wherein said processor (30; 230) is configured as to output a modified turbocharged pressure control signal (T_{PROC}) on said at least one turbocharger signal output port (60) in response to a turbocharger pressure control signal (T_{ECU}) being supplied to it on said at least one turbocharger signal input port (54), and to insert into said modified turbocharger pressure control signal (T_{PROC}) a modified turbocharger pressure depending on said current value of rotational speed.

14. A method of retrofitting a fuel injection system of a Diesel engine of an automobile, comprising connecting an electronic control device (10; 210) according to any one of the preceding claims between an electronic control unit (12) and a fuel injection actuator (14) of said Diesel engine.

## Patentansprüche

1. Elektronische Steuervorrichtung (10; 210) zur Nachrüstung eines Kraftstoffeinspritzsystems eines Dieselmotors eines Kraftfahrzeugs, umfassend:
mindestens einen Einspritzsignal-Eingangsanschluss (16), der für das Verbinden der elektronischen Steuervorrichtung (10; 210) mit mindestens einem Steuergerät-Ausgangsanschluss (18) eines Motorsteuergeräts (12) konfiguriert ist, das an seinem mindestens einen Steuergerät-Ausgangsanschluss (18) ein Kraftstoffeinspritz-Steuersignal (I_{ECU}) zur Regelung der Einspritzmenge eines Kraftstoffeinspritzaktors (14) bereitstellt;
mindestens einen Einspritzsignal-Ausgangsanschluss (20), der für das Verbinden der elektronischen Steuervorrichtung mit mindestens einem Kraftstoffeinspritzaktor-Eingangsanschluss eines Kraftstoffeinspritzaktors (14) konfiguriert ist, der auf ein Kraftstoffeinspritz-Steuersignal an seinem mindestens einen Kraftstoffeinspritzaktor-Eingangsanschluss (14) anspricht;
und einen Prozessor (30; 230), der dafür konfiguriert ist, einen aktuellen Wert der Drehzahl des Dieselmotors zu ermitteln, um ein verarbeitetes Kraftstoffeinspritz-Steuersignal (I_{PROR}) an dem mindestens einen Einspritzsignal-Ausgangsanschluss (20) als Reaktion auf ein ihm an dem mindestens einen Einspritzsignal-Eingangsanschluss (16) zugeführtes Kraftstoffeinspritz-Steuersignal (I_{ECU}) auszugeben und in das verarbeitete Kraftstoffeinspritz-Steuersignal (I_{PROC}) eine reduzierte Einspritzmenge im Vergleich zu dem an dem mindestens einen Einspritzsignal-Eingangsanschluss (16) zugeführten Kraftstoffeinspritz-Steuersignal (I_{ECU}) einzubringen, wenn der aktuelle Wert der Drehzahl einen vordefinierten oberen Schwellenwert überschreitet, wobei die Reduzierung der Einspritzmenge ab dem vordefinierten Schwellenwert mit zunehmender Drehzahl ansteigt.

2. Elektronische Steuervorrichtung (10; 210) nach Anspruch 1, wobei das verarbeitete Kraftstoffeinspritz-Steuersignal (I_{PROC}) die reduzierte Einspritzmenge darin als mindestens eines von einer reduzierten Einspritzzeit und einem reduzierten Einspritzdruck eingebracht aufweist.

3. Elektronische Steuervorrichtung (10; 210) nach Anspruch 1 oder 2, umfassend einen Gangsignal-Eingangsanschluss (31), der für den Empfang eines einen aktuellen Gang angebenden Gangsignals (G) konfiguriert ist, und wobei der vordefinierte obere Schwellenwert gangabhängig ist.

4. Elektronische Steuervorrichtung (10; 210) nach Anspruch 3, wobei der vordefinierte gangabhängige obere Schwellenwert einem optimalen Schaltpunkt zwischen dem aktuellen Gang und einem nächsten Gang entspricht.

5. Elektronische Steuervorrichtung (10; 210) nach Anspruch 3 oder 4, wobei der Prozessor (30; 230) dafür konfiguriert ist, das verarbeitete Kraftstoffeinspritz-Steuersignal (I_{PROC}) nur dann auszugeben, wenn der aktuelle Gang Teil eines vordefinierten Satzes von Gängen ist.

6. Elektronische Steuervorrichtung (10; 210) nach Anspruch 5, wobei die Reduzierung in Bezug auf die im ursprünglichen Einspritzaktor-Steuersignal (I_{ECU}) eingebrachte Einspritzmenge im Wesentlichen linear mit der Drehzahl in einem Drehzahlintervall, welches sich ab dem vordefinierten oberen Schwellenwert bis hin zu 500 bis 1500 U/min über dem vordefinierten oberen Schwellenwert erstreckt, ansteigt.

7. Elektronische Steuervorrichtung (10; 210) nach Anspruch 1 bis 6, wobei die Reduzierung zwischen 40 und 80 % ab einem Punkt in einem Bereich von 500 bis 1500 U/min über dem vordefinierten oberen Schwellenwert beträgt.

8. Elektronische Steuervorrichtung (10; 210) nach irgendeinem der Ansprüche 1 bis 7, wobei der Prozessor (30; 230) dafür konfiguriert ist, ein unmodifiziertes Kraftstoffeinspritz-Steuersignal auszugeben, wenn der aktuelle Wert der Drehzahl unter dem vordefinierten oberen Schwellenwert liegt.

9. Elektronische Steuervorrichtung nach irgendeinem der Ansprüche 1 bis 7, wobei der Prozessor (30; 230) dafür konfiguriert ist, in das verarbeitete Kraftstoffeinspritz-Steuersignal (I_{PROG}) eine erhöhte Einspritzmenge im Vergleich zu dem an dem mindestens einen Einspritzsignal-Eingangsanschluss (16) zugeführten Kraftstoffeinspritz-Steuersignal (I_{ECU}) einzubringen, wenn der aktuelle Wert der Drehzahl zwischen einem vordefinierten unteren Schwellenwert und dem vordefinierten oberen Schwellenwert liegt.

10. Elektronische Steuervorrichtung (10; 210) nach Anspruch 9, wobei der untere Schwellenwert gangabhängig ist.

11. Elektronische Steuervorrichtung (10; 210) nach irgendeinem der Ansprüche 1 bis 10, wobei der Prozessor (30; 230) dafür konfiguriert ist, in einen Fahrgeschwindigkeits-Steuermodus umgeschaltet zu werden, bei welchem der Prozessor (30; 230) den Drehzahlwert zu einem Zielwert hin regelt, indem er die Menge der Einspritzmenge einstellt, die in das an dem mindestens einen Einspritzsignal-Ausgangsanschluss (20) ausgegebene verarbeitete Kraftstoffeinspritz-Steuersignal (I_{PROC}) eingebracht ist.

12. Elektronische Steuervorrichtung (10; 210) nach Anspruch 11, umfassend einen Navigationssignal-Eingangsanschluss (48) zum Empfang eines eine aktuelle geographische Position angebenden Navigationssignals (N) und einen Speicher mit darin gespeicherten Daten einer Karte von Geschwindigkeitsbegrenzungen, wobei der Prozessor (30; 230) dafür konfiguriert ist, den Zielwert auf Basis der aktuellen geographischen Position und der Daten der Karte von Geschwindigkeitsbegrenzungen zu bestimmen.

13. Elektronische Steuervorrichtung (10; 210) nach irgendeinem der Ansprüche 1 bis 12, umfassend einen Turboladersignal-Eingangsanschluss (54) zum Empfang eines Turboladerdruck-Steuersignals (T_{ECU}), einen Turboladersignal-Ausgangsanschluss (60) zum Verbinden der elektronischen Steuervorrichtung (10; 210) mit einem Eingangsanschluss eines Turboladers (46), der auf ein Turboladerdruck-Steuersignal an seinem Eingangsanschluss anspricht, wobei der Prozessor (30; 230) dafür konfiguriert ist, ein modifiziertes Turboladerdruck-Steuersignal (T_{PROC)} an dem mindestens einen Turboladersignal-Ausgangsanschluss (60) als Reaktion auf ein Turboladerdruck-Steuersignal (T_{ECU}) auszugeben, das ihm an dem mindestens einen Turboladersignal-Eingangsanschluss (54) zugeführt wird, und in das modifizierte Turboladerdruck-Steuersignal (T_{PROC}) einen modifizierten Turboladerdruck einzubringen, der von dem aktuellen Wert der Drehzahl abhängt.

14. Verfahren zur Nachrüstung eines Kraftstoffeinspritzsystems eines Dieselmotors eines Kraftfahrzeugs, umfassend das Verbinden einer elektronischen Steuervorrichtung (10; 210) nach irgendeinem der vorangehenden Ansprüche zwischen einem elektronischen Steuergerät (12) und einem Kraftstoffeinspritzaktor (14) des Dieselmotors.

## Revendications

1. Dispositif de commande électronique (10 ; 210) pour compléter l'équipement d'un système d'injection de carburant d'un moteur Diesel d'une automobile, comprenant :
au moins un port d'entrée de signaux d'injection (16) configuré pour connecter ledit dispositif de commande électronique (10 ; 210) à au moins un port de sortie d'unité de commande (18) d'une unité de commande de moteur (12) délivrant, sur son au moins un port de sortie d'unité de commande (18), un signal de commande d'injection de carburant (I_{ECU}) pour régir une quantité d'injection d'un actionneur d'injection de carburant (14) ;
au moins un port de sortie de signaux d'injection (20) configuré pour connecter ledit dispositif de commande électronique à au moins un port d'entrée d'actionneur d'injection de carburant d'un actionneur d'injection de carburant (14) répondant à un signal de commande d'injection de carburant sur son au moins un port d'entrée d'actionneur d'injection de carburant (14) ;
et un processeur (30 ; 230) configuré de manière à déterminer une valeur courante de vitesse de rotation dudit moteur Diesel, à délivrer en sortie un signal de commande d'injection de carburant traité (I_{PROC}) sur ledit au moins un port de sortie de signaux d'injection (20) en réponse à un signal de commande d'injection de carburant (I_{ECU}) lui étant délivré sur ledit au moins un port d'entrée de signaux d'injection (16), et à insérer dans ledit signal de commande d'injection de carburant traité (I_{PROC}) une quantité d'injection réduite par rapport audit signal de commande d'injection de carburant (I_{ECU}) délivré sur ledit au moins un port d'entrée de signaux d'injection (16) si ladite valeur courante de vitesse de rotation excède un seuil supérieur prédéfini, la réduction de la quantité d'injection augmentant à partir dudit seuil prédéfini avec une vitesse de rotation en augmentation.

2. Dispositif de commande électronique (10 ; 210) selon la revendication 1, dans lequel ledit signal de commande d'injection de carburant traité (I_{PROC}) a ladite quantité d'injection réduite insérée dans celui-ci comme au moins l'une d'une durée d'injection réduite et d'une pression d'injection réduite.

3. Dispositif de commande électronique (10; 210) selon la revendication 1 ou 2, comprenant un port d'entrée de signaux de rapport de vitesse (31) configuré pour recevoir un signal de rapport de vitesse (G) indiquant un rapport de vitesse courant et dans lequel ledit seuil supérieur prédéfini dépend du rapport de vitesse.

4. Dispositif de commande électronique (10; 210) selon la revendication 3, dans lequel ledit seuil supérieur prédéfini dépendant du rapport de vitesse correspond à un point de passage optimal entre ledit rapport de vitesse courant et un rapport de vitesse suivant.

5. Dispositif de commande électronique (10 ; 210) selon la revendication 3 ou 4, dans lequel ledit processeur (30 ; 230) est configuré de manière à ne délivrer en sortie ledit signal de commande d'injection de carburant traité (I_{PROC}) que si ledit rapport de vitesse courant fait partie d'un ensemble prédéfini de rapports de vitesse.

6. Dispositif de commande électronique (10 ; 210) selon la revendication 5, dans lequel ladite réduction se rapportant à la quantité d'injection insérée dans le signal de commande d'actionneur d'injection (I_{ECU}) d'origine augmente de façon sensiblement linéaire avec la vitesse de rotation dans un intervalle de vitesse de rotation s'étendant dudit seuil supérieur prédéfini jusqu'à de 500 à 1 500 tr/min au-dessus dudit seuil supérieur prédéfini.

7. Dispositif de commande électronique (10 ; 210) selon la revendication 1 à 6, dans lequel ladite réduction se monte à entre 40 et 80% à partir d'un point dans une plage de 500 à 1 500 tr/min au-dessus dudit seuil supérieur prédéfini.

8. Dispositif de commande électronique (10 ; 210) selon l'une quelconque des revendications 1 à 7, dans lequel ledit processeur (30 ; 230) est configuré de manière à délivrer en sortie un signal de commande d'injection de carburant non modifié si ladite valeur courante de vitesse de rotation est inférieure audit seuil supérieur prédéfini.

9. Dispositif de commande électronique (10 ; 210) selon l'une quelconque des revendications 1 à 7, dans lequel ledit processeur (30 ; 230) est configuré de manière à insérer dans ledit signal de commande d'injection de carburant traité (I_{PROC}) une quantité d'injection augmentée par rapport audit signal de commande d'injection de carburant (I_{ECU}) délivré sur ledit au moins un port d'entrée de signaux d'injection (16) si ladite valeur courante de vitesse de rotation est entre un seuil inférieur prédéfini et ledit seuil supérieur prédéfini.

10. Dispositif de commande électronique (10 ; 210) selon la revendication 9, dans lequel ledit seuil inférieur dépend du rapport de vitesse.

11. Dispositif de commande électronique (10 ; 210) selon l'une quelconque des revendications 1 à 10, dans lequel ledit processeur (30 ; 230) est configuré pour être commuté dans un mode de régulation de vitesse dans lequel ledit processeur (30 ; 230) régule ladite valeur de vitesse de rotation jusqu'à une valeur cible en ajustant la quantité de quantité d'injection insérée dans le signal de commande d'injection de carburant traité (I_{PROC}) délivré en sortie sur ledit au moins un port de sortie de signaux d'injection (20).

12. Dispositif de commande électronique (10; 210) selon la revendication 11, comprenant un port d'entrée de signaux de navigation (48) pour recevoir un signal de navigation (N) indiquant une position géographique courante et une mémoire ayant des données de carte de limites de vitesse stockées dans celle-ci, dans lequel ledit processeur (30 ; 230) est configuré de manière à déterminer ladite valeur cible sur la base de ladite position géographique courante et desdites données de carte de limites de vitesse.

13. Dispositif de commande électronique (10 ; 210) selon l'une quelconque des revendications 1 à 12, comprenant un port d'entrée de signaux de turbocompresseur (54) pour recevoir un signal de commande de pression de turbocompresseur (T_{ECU}), un port de sortie de signaux de turbocompresseur (60) pour connecter ledit dispositif de commande électronique (10 ; 210) à un port d'entrée d'un turbocompresseur (46) répondant à un signal de commande de pression de turbocompresseur sur son port d'entrée, dans lequel ledit processeur (30 ; 230) est configuré de manière à délivrer en sortie un signal de commande de pression de turbocompresseur modifié (T_{PROC}) sur ledit au moins un port de sortie de signaux de turbocompresseur (60) en réponse à un signal de commande de pression de turbocompresseur (T_{ECU}) lui étant délivré sur ledit au moins un port d'entrée de signaux de turbocompresseur (54), et à insérer dans ledit signal de commande de pression de turbocompresseur modifié (T_{PROC}) une pression de turbocompresseur modifiée en fonction de ladite valeur courante de vitesse de rotation.

14. Procédé pour compléter l'équipement d'un système d'injection de carburant d'un moteur Diesel d'une automobile, comprenant la connexion d'un dispositif de commande électronique (10; 210) selon l'une quelconque des revendications précédentes entre une unité de commande électronique (12) et un actionneur d'injection de carburant (14) dudit moteur Diesel.
